# EUROPÄISCHE PATENTSCHRIFT

(11) **EP 2 780 677 B1**
(45) Veröffentlichungstag und Bekanntmachung des Hinweises auf die Patenterteilung: **06.11.2019**
(21) Anmeldenummer: 12795758.7
(22) Anmeldetag: 09.11.2012
(51) Int. Cl.: G01H 9/00, G01D 5/353, G01S 7/521

(54) **KRAFTFAHRZEUGANBAUTEIL MIT WANDLERANORDNUNG ZUR ERFASSUNG VON SCHALL- UND/ODER DRUCKWELLEN MIT EINEM FASEROPTISCHEN SENSOR**
MOTORVEHICLE ADD-ON PART WITH CONVERTER ARRANGEMENT FOR CAPTURING SOUND WAVES AND/OR PRESSURE WAVES BY MEANS OF A FIBER-OPTIC SENSOR
PIÈCE DE MONTAGE D'AUTOMOBILE, AVEC ENSEMBLE TRANSDUCTEUR POUR DÉTECTER DES ONDES SONORES ET/OU DE PRESSION, COMPORTANT UN CAPTEUR À FIBRES OPTIQUES

(30) Priorität: 15.11.2011 DE 102011086343
(43) Veröffentlichungstag der Anmeldung: 24.09.2014
(73) Patentinhaber: Robert Bosch GmbH, 70442 Stuttgart (DE)
(72) Erfinder: BARTYLLA, David, 71229 Leonberg (DE); SCHEUERLE, Thomas, 71711 Murr (DE)
(86) Internationale Anmeldenummer: PCT/EP2012/072283
(87) Internationale Veröffentlichungsnummer: WO 2013/072256

(56) Entgegenhaltungen:
- DE-A1-102006 044 656
- DE-A1-102008 016 558
- US-A- 5 072 110
- US-A- 6 144 790
- US-A1- 2010 139 405

## Beschreibung

### Stand der Technik

Die Erfindung betrifft ein Kraftfahrzeuganbauteil gemäß des Oberbegriffs des Anspruchs 1.

In der Fahrzeugtechnik sind nach unterschiedlichen Messprinzipien arbeitende Sensoren bekannt, die sowohl als Elemente in Sicherheitseinrichtungen als auch in Umfelderkennungssystemen eingesetzt werden. Es wird zwischen Sensoren zur Erfassung eines Aufpralls bzw. einer damit verbundenen charakteristischen Deformation von Kraftfahrzeuganbauteilen und berührungslos arbeitenden, verschleißfreien Sensoren unterschieden.

Zur Erkennung eines Front-, Seiten- und/oder Heckaufpralls werden beispielsweise faseroptische Sensoren eingesetzt. Die Funktionsweise derartiger, in sensitiven Bereichen angeordneten faseroptischen Sensoren basiert auf einer Einkoppelung von Licht in ein Ende einer Lichtleitfaser und einer Auskoppelung an einem zweitem Ende, wobei sich hier eine Erfassungseinheit anschließt. Im eigentlichen Sensorelement moduliert ein optischer Effekt das Licht in Abhängigkeit einer zu erfassenden Messgröße. Im Falle eines Objektanpralls erfolgt eine Deformation der in dem sensitiven Bereich angeordneten Lichtleitfaser, wobei sich beispielsweise die Intensität des ausgekoppelten Lichts verändert, so dass die gemessene Intensität des austretenden Lichts als Maß für die Deformation der sensitiven Bereiche verwendet werden kann. Faseroptische Sensoren sind flexibel, leichtgewichtig, mechanisch belastbar und weitgehend unempfindlich gegenüber Temperaturschwankungen. Allerdings erweist sich die Befestigung derartiger Sensoren als problematisch

Aufbau und Funktionsweise faseroptischer Sensoranordnungen im Kraftfahrzeug ist beispielsweise in DE 103 33 732 B3 beschrieben, wobei die Sensoranordnung direkt auf der Innenseite der Außenverkleidung angeordnet ist, welche als Stoßfänger oder Frontspoiler ausgebildet ist.

Zur Erfassung von Distanzen, beispielsweise bei Unterstützung eines Einparkvorgangs sind berührungslos arbeitende, verschleißfreie Sensoren bekannt, welche häufig als elektroakustische Wandler realisiert sind. Die Funktionsweise solcher elektro-akustischer Wandler, insbesondere Schallwandler, beruht dabei auf einem direkten Zusammenhang zwischen einer Krafteinwirkung auf einer schwingfähigen Elektrodenmembran und einer elektrischen Spannung einer Basiselektrodenanordnung in Abhängigkeit des Abstands zwischen den Elektroden sowie der Kapazität der Elektrodenanordnung.

Ultraschallwandler werden üblicherweise als Schallwandler eingesetzt, um Abstandsmessungen durchzuführen. Dazu wird ein Ultraschallsensor als Sender angesteuert, um einen Ultraschallimpuls auszusenden. Nach dem Senden wird der Ultraschallimpuls an einem in Reichweite des Ultraschallsensors liegenden Objekts reflektiert und auf einen als Empfänger fungierenden Ultraschallsensor zurückgeworfen. Aus der Laufzeit des Ultraschallimpulses wird in einer dem Empfänger nachfolgenden Elektronik der Abstand zu dem reflektierten Objekt bestimmt.

Derartige, im Kraftfahrzeugbau verwendete Schallwandler liefern zwar eine große Bandbreite und eine hohe Sensitivität. Allerdings sind Schallwandler im Allgemeinen sichtbar insbesondere in Stoßfängern von Kraftfahrzeugen verbaut, wobei diese hinsichtlich ihres Crashverhaltens beeinflusst werden. Ferner sind derart angeordnete Schallwandler vor Umwelteinflüssen, beispielsweise Feuchtigkeit, nur durch eine dünne Membran geschützt, die eine geringe mechanische Robustheit aufweist. Durch mechanische Einwirkung oder Vibrationen kann es zu Rissen in der Membran kommen, so dass Feuchtigkeit eindringen kann und den Schallwandler negativ beeinflusst.

Aus DE 10 2006 038 598 A1 ist ein Ultraschallsensor bekannt, der von außen verdeckt hinter einem Stoßfänger oder an dessen nicht sichtbarer Rückseite eingebaut ist. Hierfür ist ein piezoelektrischer Wandler, ein Biegewandler, an einer dünnwandigen Rückseite eines Außenverkleidungselements zur Ausstrahlung in einen Außenraum mechanisch gekoppelt. Bei angelegter elektrischer Spannung verändert sich der Durchmesser des piezoelektrischen Materials, wobei sich die Verformung von einer damit verbundenen Grundplatte auf ein damit mechanisch angekoppeltes Außenverkleidungselement überträgt, um in Reaktion auf die Verformung dann Schall von einer äußeren Oberfläche des Außenverkleidungselements abzustrahlen bzw. reflektierten Schall zu empfangen. Sender und Empfänger können der selbe Wandler sein, wenn die Schallwelle in geeigneter Weise reflektiert wird.

Aus US 6144790 A ist ein faseroptischen Sensor zur Erkennung eines eingeklemmten Objektes in einem Fahrzeugfenster bekannt. Der Sensor umfasst eine Multimoden-Glasfaser, die in die Fahrzeugtür integriert ist. Kohärentes Licht wird durch die Glasfaser geleitet und mittels eines Detektors wird ein resultierendes "Speckle"-Muster detektiert. Eingeklemmte Objekte üben Kräfte auf die Glasfaser aus, was zu einer Änderung des Speckle-Musters am Detektor führt. Diese Änderung wird erfasst und ein gegebenenfalls eingeklemmtes Objekt wird erkannt.

DE 102006044656 A1 offenbart eine Befestigungskonstruktion für einen Ultraschallsensor, die derart ausgebildet ist, dass der Ultraschallsensor auf der Innenseite eines Fahrzeugteils ("Wandelement") angebracht werden kann. Eine schwingende Oberfläche des Ultraschallsensor ist akustisch mit einem Kontaktabschnitt des Wandelements gekoppelt, so dass Schwingungen zwischen dem Ultraschallsensor und dem Wandelement übertragen werden können.

DE 102008016558 A1 zeigt einen Ultraschallsensor, der an der Innenseite eines Fahrzeugbauteils (Stoßfängers) befestigt werden kann. Der Stoßfänger ist dem Abschnitt, in dem der Ultraschallsensor angebracht ist, mit einer verringerten Wandstärke ausgebildet und bildet damit eine Membran zum Abstrahlen und Empfangen von Schallwellen.

US 2010/0139405 A1 beschreibt ein faseroptisches Messsystem zur Schalldetektion. Laserlicht wird durch eine optische Faser auf einen Detektor geleitet, der ein Teil eines Beugungsmusters des Lichtstrahls detektiert. Einfallende Schallwellen verursachen eine Deformation der optischen Faser, was sich einer Änderung des Beugungsmusters äußert.

### Offenbarung der Erfindung

Erfindungsgemäß wird ein Kraftfahrzeuganbauteil gemäß Anspruch 1 vorgeschlagen.

An einem Kraftfahrzeug werden Sensoren gängigerweise in einem Frontmodul, insbesondere einem Kraftfahrzeugstoßfänger, oder einem Heckmodul, z.B. einem Heckstoßfänger integriert. Der Begriff Sensor umfasst ein gegebenenfalls mehrteiliges Funktionsbauteil, das zur Aufnahme beziehungsweise Messung bestimmter physikalischer Größen dient und diese in ein Signal umwandelt. Insbesondere kann der Sensor ein oder mehrere Wandlerelemente umfassen, d.h. diejenigen Elemente, die für die Messung und/oder Umwandlung der physikalischen Größen in Signale zuständig sind.

Ein Sensor, welcher beispielsweise als Abstandssensor oder als Sensor zum Scannen der Vorausstrecke eingesetzt wird, ist ein Ultraschallwandler, wobei insbesondere ein Sender und ein Empfänger umfasst sind, welche getrennten Einheiten zugordnet sein können. Hieraus ergibt sich vorteilhaft, dass der Ultraschallwandler hinsichtlich des Raumbedarfs, der Designfreiheit, der Kostenersparnis und der Erleichterung des Einbaus optimiert in einen Stoßfänger, einem Anbauteil am Kraftfahrzeug und/oder an einer anderen geeigneten Stelle aufgenommen werden kann.

Ultraschallwandler in Kraftfahrzeuganbauteilen werden im Allgemeinen offen montiert, d.h. sie werden von der Vorderseite her auf- bzw. eingesetzt. Überraschenderweise hat sich ergeben, dass ein verdeckter Einbau eines Ultraschallwandlers, insbesondere einer Empfängereinheit, möglich ist, wenn das Stoßfängermaterial in ausreichendem Maße angeregt wird, die von einer Sendereinheit ausgesandten und an einem zu detektierenden Objekt reflektierten Schall- und/oder Druckwellen zu empfangen.

Ein erfindungsgemäßes Kraftfahrzeuganbauteil mit einer an dem Kraftfahrzeuganbauteil angeordneten Wandleranordnung umfasst mindestens eine Lichtleitfaser, welche in einem Abschnitt des Kraftfahrzeuganbauteils derart integriert ist, dass der entsprechende Abschnitt durch die eingekoppelten Schall- und/oder Druckwellen in Schwingungen versetzt wird. Die mindestens eine Lichtleitfaser ist einer Wandleranordnung zugeordnet, welche nach dem optischen Messprinzip arbeitet. In einen derartigen Lichtleiter wird Licht einer Lichtquelle eingekoppelt und in einem Faserkern geführt, dessen Brechzahl sich von der eines Fasermantels unterscheidet. In dem eigentlichen Wandlerelement moduliert ein optischer Effekt das Licht in Abhängigkeit einer zu erfassenden Messgröße, wobei nach Art der Lichtmodulation in intensitäts-, frequenz-, wellenlängen-, phasen- und polarisationsmodulierend unterschieden wird. Die messgrößenspezifische Änderung wird dem Licht aufmoduliert, das über einen Detektor, beispielsweise eine Lichterfassungseinheit, erfasst und in einer Messelektronik ausgewertet wird. Derartige Lichtleitfasern ermöglichen es, bei Abmessungen von wenigen Mikrometern geometrische Veränderungen im Bereich von wenigen Zehntel Nanometern zu messen.

Erfindungsgemäß beruht die Detektion von Schall- und/oder Druckwellen auf der durch die eingekoppelte Schallwelle verursachte elastische Deformation eines Abschnitts des Anbauteils eines Kraftfahrzeugs, in welchem ein faseroptischer Sensor mit mindestens einer Lichtleitfaser integriert ist. Die erfindungsgemäß vorgeschlagene Wandleranordnung ist geeignet, um an einem zu detektierenden Objekt reflektierte Schallwellen mit Frequenzen im Ultraschallbereich bzw. in dem für eine technische Anwendung vorgesehenen Frequenzbereich von 40 - 100 kHz zu charakterisieren.

Hierfür wird die mindestens eine Lichtleitfaser in das Material des Anbauteils eines Kraftfahrzeugs, insbesondere in einen Stoßfänger, integriert. Ein derartiges Anbauteil wird im allgemeinen aus einem Kunststoffwerkstoff im Gießverfahren hergestellt. Mit Hilfe einer Finite-Elemente-Simulation kann ein derartiges Kraftfahrzeuganbauteil derart gestaltet werden, dass es ausgewählte, lokal begrenzte Abschnitte aufweist, welche sich durch eine reduzierte Materialstärke auszeichnen und welche derart angeordnet sind, dass von einem Schallsensor ausgestrahlte und an einem Objekt von Interesse reflektierte Schallwellen empfangen werden. Insbesondere werden die Abschnitte derart angeordnet, dass in ihnen ein Druckmaximum vorliegt. Durch die eingekoppelten Schall- und/oder Druckwellen entsprechender Frequenz wird der begrenzte Abschnitt in Schwingungen versetzt, beispielsweise können diese lokalen Abschnitte durch die Frequenz der Schall- und/oder Druckwellen in Eigenresonanz schwingen.

Ein derartig gestaltetes Kraftfahrzeuganbauteil kann eine strukturierte Rückseite aufweisen. Beispielsweise können Taschen oder Hohlräume vorgesehen sein oder in lokalen Bereichen das Material des Anbauteils stufenförmig oder wellenförmig im Aufnahmebereich des faseroptischen Sensors reduziert sein. Derartige Abstufungen können auch durch Profilfräsung an einem Kraftfahrzeuganbauteil hergestellt werden. Inwieweit die Materialdicke in dem lokalen Abschnitt reduziert wird, richtet sich unter anderem nach der Funktionsfähigkeit des lokalen Abschnitts als Resonator zu fungieren, nach einer zu gewährleistenden Stabilität der Stoßfängerstruktur und nach der Größe des lokalen Abschnitts bzw. der Wandleranordnung. So sollten bei größeren Wandleranordnungen, welche eine Flächengröße von einigen Quadratzentimetern umfassen können, die lokalen Abschnitte zur Aufnahme der Wandleranordnung eine Materialstärke im Bereich von 10 bis 3 mm aufweisen. Flächenmäßig kleinere Wandleranordnungen können allerdings auch in lokalen Abschnitten geringerer Materialstärke angeordnet werden. Für die Funktionsfähigkeit der in dem lokalen Abschnitt angeordneten Wandleranordnung zur Detektion von Schall- und/oder Druckwellen ist auch der Unterschied der Materialstärke zwischen dem lokalen Abschnitt und dem umgebenden Material von Bedeutung.

Die Begrenzung der entsprechenden lokalen Abschnitte eines derartigen Anbauteils können durch Einfräsungen oder Aussparungen begrenzt sein. Der lokal begrenzte Abschnitt, in welchem die erfindungsgemäße Wandleranordnung vorgesehen ist, kann beispielsweise recheckig, rund oder elliptisch geformt sein oder eine andere geeignete geometrische Formgebung aufweisen.

An dem Anbauteil, welches beispielsweise als Stoßfänger, Spoiler oder anderes Außenverkleidungselement für ein Kraftfahrzeug ausgeführt sein kann, können mehrere faseroptische Sensoren integriert sein. Insbesondere zur Unterstützung eines Einparkvorganges werden mehrere Wandleranordnungen an dem Kraftfahrzeuganbauteil angeordnet.

Die mindestens eine Lichtleitfaser kann bei der Herstellung des Anbauteils derart in das Material eingebracht werden, dass sie in dem entsprechend ausgebildeten Abschnitt nahe der Oberfläche angeordnet ist, wobei die mindestens eine Lichtleitfaser zumindest teilweise umgossen wird.

Die mindestens eine Lichtleitfaser kann aber auch in einer an dem Anbauteil eines Kraftfahrzeugs angeordneten Schicht integriert sein, wobei die mindestens eine Lichtleitfaser vollständig oder teilweise von der Schicht umgeben bzw. eingebettet ist. Schicht, Lichtleitfaser und Anbauteil bilden dabei eine formschlüssige Verbindung. Hierbei kann das Anbauteil, welches auch als Träger bezeichnet wird, aus Kunststoff, Metall oder einem anderen Material hergestellt sein.

Die Lichtleitfaser kann einen Faserkern, einen Fasermantel und eine Faserbeschichtung aufweisen. Die Lichtleitfaser kann eine Einfach- oder Mehrfachkernfaser sein. Die Lichtfaser kann eine Einmoden - oder Mehrmodenfaser sein. Beispielsweise ist eine multimoden Polymerfaser geeignet, da diese neben einem starken faseroptischen Effekt der Polymerfaser eine ähnliche Elastizität wie das Material des Kraftfahrzeuganbauteils aufweist. Die mindestens eine Lichtleitfaser wird derart in den lokal begrenzten Abschnitt des Kraftfahrzeuganbauteils integriert, welcher beispielsweise durch Finite-Elemente Simulation als derjenige Bereich ermittelt wurde, in dem ein Druckmaximum zu erwarten ist, dass der Anteil der Lichtleitfaser möglichst groß ist. Hierbei kann die Lichtleitfaser in Form von Schleifen, Windungen, mäanderförmig oder in Form von konzentrischen Kreisen oder spiralförmig in dem lokalen Abschnitt angeordnet sein, wobei dies auch in Abhängigkeit von der Gestalt des lokalen Abschnitts steht.

Eine Lichtleitfaser des faseroptischen Sensors, der in der erfindungsgemäßen Wandleranordnung umfasst ist, kann auch als Lichtleitfaser mit Mikrokrümmungen gestaltet sein, wobei eine lokale Modifikation des Krümmungswinkels der Faser unter der Wirkung des Schalls auf den faseroptischen Sensor hervorgerufen und somit als Messgröße erfasst wird.

In einer bevorzugten Ausführungsform ist mindestens eine Lichtleiterfaser in einem lokalen Abschnitt des Kraftfahrzeuganbauteils vorgesehen, in die an einer Einkoppelstelle Licht von einem lichtemittierenden Element (Lichtquelle) über einen Polarisationsfilter eingeleitet wird. An einer Auskoppelstelle der Lichtleitfaser kann ein weiterer Polarisationsfilter und ein lichtaufnehmendes Element vorgesehen sein. Somit ist die optische Durchlässigkeit des optoelastischen Materials der Lichtleitfaser, d.h. die zu detektierende Intensität, eine Funktion der mechanischen Spannungen, welche auf die Lichtleitfaser wirken. Das lichtemittierende Element kann beispielsweise eine Leuchtdiode oder ein Laser sein, wobei geeignete lichtemittierende Elemente Licht mit einem schmalen Spektrum aussenden. Das lichtaufnehmende Element kann beispielsweise eine Photodiode oder ein Phototransistor sein. Weitere geeignete lichtaufnehmende Elemente sind schnelle auf Halbleiter basierende Detektoren mit einer hohen Empfindlichkeit und einer geringen Trägheit.

Die optische Durchlässigkeit, d.h. die Intensität dieser Vorrichtung ist eine Funktion der mechanischen Spannungen, die auf das optoelastische Material der Lichtleitfaser wirken und mit der erfindungsgemäßen Wandleranordnung erfasst werden.

Der Wandleranordnung ist ferner eine Elektronik zugeordnet, welche auf einer Leiterplatine angeordnet sein kann, die mit dem faseroptischen Sensor verbunden ist. Von der Platine führen Versorgungs- und Datenleitungen ab, welche beispielsweise an der Rückseite des Kraftfahrzeugsanbauteils geführt sind. Zur Rückseite hin kann die Anordnung der Wandleranordnung von einer Grundplatte abgedichtet werden, welche einpresst, verklebt oder in anderer geeigneter Weise befestigt werden kann. Dadurch wird verhindert, dass Schmutz und Feuchtigkeit in die Wandleranordnung eindringen kann.

Die Wandleranordnung mit einem faseroptischen Sensor ist geeignet zum Detektieren von Schall- und/oder Druckwellen, welche den Abschnitt, in dem die mindestens eine Lichtleitfaser integriert ist, zu mechanischen Schwingungen anregt oder verformt, wobei in der mindestens einen Lichtleitfaser eine zu detektierende Modulation des eingekoppelten Lichts hervorgerufen wird.

### Vorteile der Erfindung

Die Erfindung ermöglicht es auf eine einfache Art und Weise einen Schall- und/oder Druckwandler zu erzeugen, der universell einsetzbar ist und insbesondere im Kraftfahrzeugbau hohe wirtschaftliche Bedeutung erlangt. Die Wandleranordnung kann von außen verdeckt, auf oder an der Rückseite des erfindungsgemäßen Kraftfahrzeuganbauteils eingebaut werden. Hierbei ergeben sich insbesondere Vorteile hinsichtlich der Designfreiheit, da die Wandleranordnung von außen nicht sichtbar ist und demnach überall angebracht werden kann. Insbesondere ist es somit möglich, eine Sendereinheit eines Ultraschallwandlers von einer Empfangseinheit eines Ultraschallwandlers getrennt voneinander anzuordnen und so ein hohes Maß an Gestaltungsvielfalt zu erzielen.

Ferner ergibt sich durch eine verdeckte Anordnung eine Kostenersparnis, da ein Überlackieren des erfindungsgemäßen Wandlers in Stoßfängerfarbe entfällt. Der Einbau eines derartigen Wandlers ist ebenfalls vereinfacht, da durch den Einbau im nichtsichtbaren Bereich optische und designtechnische Vorgaben nicht notwendig sind.

Durch die Realisierung eines Ultraschallwandlers durch einen faseroptischen Sensor ergeben sich ferner Vorteile, die den eingesetzten Lichtleitfasern zugeordnet werden. So erweisen sich Lichtleitfasern als robust, leichtgewichtig und gegenüber Temperaturschwankungen unempfindlich. Faseroptische Sensoren zeichnen sich durch eine hohe Kompaktheit mit hoher zeitlicher und räumlicher Auflösung aus. Daraus resultiert insgesamt, dass ein Wandler mit erhöhter Zuverlässigkeit und Lebensdauer entwickelt werden kann, welcher darüberhinaus einfach und kostengünstig hergestellt werden kann. Durch den Einsatz eines faseroptischen Sensors zur Erfassung von Schwingungen, welche durch auftreffende Schall- und/oder Druckwellen erzeugt werden, können Wandler mit einer hohen Bandbreite an Sensitivität erhalten werden. Die Wandleranordnung erweist sich darüberhinaus als robust gegenüber Schmutz und Feuchtigkeit, so dass diese für Anwendungen in rauen Umgebungen geeignet ist.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: einen faseroptischen Sensor mit einer Lichtleitfaser in einem schwingfähigen Abschnitt eines Kraftfahrzeuganbauformteils;
- Figur 2: eine Wandleranordnung mit einem faseroptischen Sensor in schematischer Darstellung;
- Figur 3: eine Ausführungsform einer erfindungsgemäßen Wandleranordnung in Aufsicht.

### Ausführungsformen der Erfindung

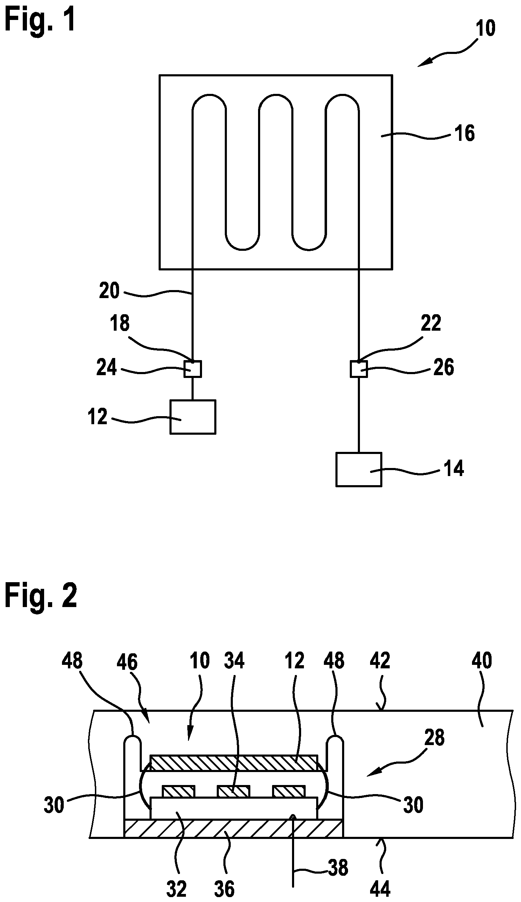

Figur 1 zeigt schematisch den Aufbau eines faseroptischen Sensors 10 mit einer Lichtquelle 12 und einer Lichterfassungseinheit 14. In einem Trägermaterial 16 ist der faseroptische Sensor 10 angeordnet, bzw. eingebettet oder aufgelegt und befestigt. Das Trägermaterial 16 ist eine Platte aus einem geeigneten Material oder wird durch einen geeigneten Abschnitt eines Anbauformteils bereitgestellt. An einer Einkoppelstelle 18 wird Licht von der Lichtquelle 12 in ein Ende einer Lichtleitfaser 20 des faseroptischen Sensors 10 eingeleitet, wobei das Licht durch die Lichtleitfaser 20 des faseroptischen Sensors 10 geleitet wird und schließlich mit einer verbleibenden Intensität an ein anderes Ende der Lichtleitfaser 20 an eine Auskoppelstelle 22 gelangt. Dort kann von der Lichterfassungseinheit 14 beispielsweise die Lichtintensität gemessen werden. An der Einkoppelstelle 18 und an der Auskoppelstelle 22 kann jeweils ein erster und ein zweiter linearer Polarisationsfilter 24, 26 vorgesehen sein, die gleich ausgerichtet sind. Wird nun die Lichtleitfaser 20 deformiert, so hat dies Einfluss auf die austretende Lichtintensität und somit auf die von der Lichterfassungseinheit 14 erfasste Lichtintensität. Aus der Differenz des durch die Lichtquelle 12 eingekoppelten Lichts zu der an der Lichterfassungseinheit 14 nachgewiesenen Lichtintensität ergibt sich eine Kenngröße für die Deformation der Lichtleitfaser 20 Über eine entsprechende elektrische Schaltung kann demnach ein Intensitätssignal der Lichterfassungseinheit 14 genutzt werden, um ein Spannungssignal mittels eines opto-elektrischen Wandlers zu erzeugen. Das Spannungssignal wird einer Auswerteeinheit (nicht dargestellt) zugeleitet, um aus den empfangenen Signalen beispielsweise einen Anprall zu detektieren oder aus den dem Spannungssignal zugrundegelegten eingekoppelten Schall- und/oder Druckwellen, die von einer Sendereinheit eines Ultraschallwandlers ausgestrahlt und von einem Objekt reflektiert wurden, eine Erkennung des Umfeldes abzuleiten. Die in der Figur 1 dargestellte Lichtleitfaser 20 ist in oder auf dem Trägermaterial 16 in einer bestimmten Anordnung integriert bzw. aufgenommen. Die Lichtleitfaser 20 ist in dem dargestellten Ausführungsbeispiel in Schleifen gelegt, wobei auf die Lichtleitfaser 20 eine gleichphasige Wirkung im Resonanzfall einwirkt, so dass sich entlang der Faserlänge der Effekt der Polarisationsmodulation addiert und sich die Empfindlichkeit der Wandleranordnung erhöht. Denkbar wäre auch eine Anordnung in Form eines flächendeckenden Lichtleitfasergeflechts, beispielsweise in Form eines Gitters oder parallel verlaufenden mehreren Lichtleitfasern.

Eine Detailansicht einer Wandleranordnung 28 mit dem faseroptischen Sensor 10 ist in Figur 2 schematisch dargestellt. Der faseroptischer Sensor 10 umfasst die Lichtleitfaser 12, welche über Anschlüsse 30 mit einer Leiterplatine 32 verbunden ist, an der entsprechende Elektronikkomponenten 34 aufgenommen sind. Die Leiterplatine 32 ist mit einer Grundplatte 36 verbunden, von der Daten- und Versorgungsleitungen 38 abführen. In der Ansicht der Figur 2 ist der faseroptische Sensor 10 an einem erfindungsgemäßen Kraftfahrzeuganbauteil 40 aufgenommen, wobei mit 42 die Vorderseite des Kraftfahrzeuganbauteils 40 nach der Umgebung orientiert, beispielsweise eines Stoßfängers, und mit 44 die Rückseite des Kraftfahrzeuganbauteils 40 bezeichnet ist.

Der Figur 2 ist ferner zu entnehmen, dass die Wandleranordnung 28 an dem Kraftfahrzeuganbauteil 40 in einem speziell ausgebildeten Abschnitt 46 angeordnet ist. Der Abschnitt 46 kann beispielsweise durch Hohlräume, Taschen oder Stufen gebildet werden, wobei die Materialstärke des Kraftfahrzeuganbauteils 40 in dem Abschnitt 46 in einem zentralen Bereich auf eine Wandstärke im Bereich von 10 bis 3 mm abnimmt. Der Abschnitt 46 kann dabei eine runde, elliptische oder andere geeignete Form aufweisen. Einfräsungen 48 oder Aussparungen begrenzen den Abschnitt 46 gegenüber der Umgebung. Der Abschnitt 46 mit einer geeigneten Form, welcher in der Rückseite 44 des Kraftfahrzeuganbauteils bereitgestellt ist, kann durch Profilfräsungen an dem Kraftfahrzeuganbauteil 40 hergestellt werden. Vorzugsweise ist ein derartig strukturierter Abschnitt 46 jedoch schon in der Spritzgussform zur Herstellung des Kraftfahrzeuganbauteils 40 aus Kunststoff vorgesehen, wobei die Einfräsungen 48 nachträglich hergestellt werden können. Durch den derart ausgebildeten und begrenzten Abschnitt 46 ist ein schwingungsfähiger Bereich des Kraftfahrzeuganbauteils 40 begrenzt, welcher als Einkoppelabschnitt für die von einem detektierten Objekt reflektierten Schall- und/oder Druckwellen fungiert.

In dem Abschnitt 46 ist der faseroptische Sensor 10 angeordnet. Insbesondere ist die mindestens eine Lichtleitfaser 20 in dem Abschnitt 46 eingebracht, so dass bei Einkoppelung einer Schallwelle der Abschnitt 46 in Schwingung versetzt wird, wodurch eine auf die mindestens eine Lichtleitfaser 20 wirkende Spannung zu einer Modulation des in der Lichtleitfaser geführten Lichts führt. Insbesondere ist der Abschnitt 46 derart gestaltet, dass dieser durch die eingekoppelten Schall- und/oder Druckwellen in Resonanz versetzt wird. Der faseroptische Sensor 10, der die mindestens eine Lichtleitfaser 20 und die Leiterplatine 32 mit den Elektronikkomponenten 34 umfasst, ist auf der Grundplatte 36 oder in einem nicht dargestellten Topf auf der Rückseite in dem bereitgestellten, begrenzten Abschnitt 46 mechanisch gut an dem Kraftfahrzeuganbauteil 40 montiert. Die jeweils geforderte Geometrie des Abschnitts 46 kann durch eine Finite-Elemente-Simulation ermittelt werden, wobei der Abschnitt 46 in einem Bereich am Kraftfahrzeuganbauteil 40 angeordnet ist, in dem ein Druckmaximum zu erwarten ist.

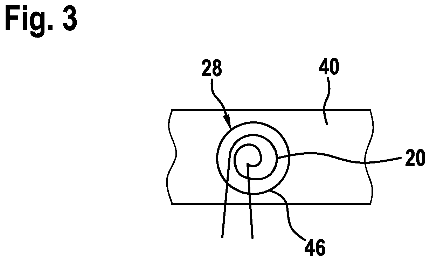

In Figur 3 ist eine Aufsicht auf das Kraftfahrzeuganbauteil 40 mit dem ausgebildeten begrenzten Abschnitt 46 und der mindestens einen Lichtleitfaser 20 dargestellt. In der dargestellten Ausführungsform ist der begrenzte Abschnitt 46 in runder Form ausgebildet. Die mindestens eine Lichtleitfaser 20 ist spiralförmig in dem runden begrenzten Abschnitt 46 angeordnet, in welchem sich ein Druckmaximum in Form konzentrischer Kreise ausbildet.

## Patentansprüche

1. Kraftfahrzeuganbauteil, wobei eine Wandleranordnung (28) zur Erfassung von Schall- und/oder Druckwellen mit einem faseroptischen Sensor (10), einer Lichtquelle (12) und einer Lichterfassungseinheit (14) an dem Kraftfahrzeuganbauteil angeordnet ist, wobei die Lichtquelle (12) an einem Ende mindestens einer Lichtleitfaser (20) und die Lichterfassungseinheit (14) an einem anderen Ende der Lichtleitfaser (20) angekoppelt sind, und die mindestens eine Lichtleitfaser (20) in einem Abschnitt (46) des Kraftfahrzeuganbauteils integriert ist, welcher durch die Schall- und/oder Druckwellen angeregt wird, **dadurch gekennzeichnet, dass** die Anregung des Abschnitts (46) durch eingekoppelte Schall- und/oder Druckwellen erfolgt, wobei diese von einer Sendeeinheit eines Schallwandlers in eine Umgebung abgestrahlt und von einem Objekt reflektiert werden, wobei der Abschnitt (46) derart gewählt ist, dass die eingekoppelten Schall- und/oder Druckwellen ein Druckmaximum aufweisen.

2. Kraftfahrzeuganbauteil (28) gemäß Anspruch 1, **dadurch gekennzeichnet, dass** der Abschnitt (46) an einer Rückseite (44) des Kraftfahrzeuganbauteils (40) vorgesehen ist, wobei der Abschnitt (46) durch Einfräsungen und Aussparungen von der Umgebung abgegrenzt ist und einen zentralen Bereich mit reduzierter Wandstärke aufweist.

3. Kraftfahrzeuganbauteil (28) gemäß einem der Ansprüche 1 oder 2, **dadurch gekennzeichnet, dass** die eingekoppelten Schall- und/oder Druckwellen den Abschnitt (46) zur Eigenresonanz anregen.

4. Kraftfahrzeuganbauteil (28) gemäß einem der Ansprüche 1 bis 3, **dadurch gekennzeichnet, dass** die mindestens eine Lichtleitfaser (20) derart in das Material des Kraftfahrzeuganbauteils (40) eingebracht ist, dass sie in dem Abschnitt (46) nahe der Oberfläche angeordnet ist, wobei die mindestens eine Lichtleitfaser zumindest teilweise umgossen ist.

5. Kraftfahrzeuganbauteil (28) gemäß einem der Ansprüche 1 bis 4, **dadurch gekennzeichnet, dass** die mindestens eine Lichtleitfaser (20) derart angeordnet ist, dass sie das Druckmaximum durchläuft, wobei die mindestens eine Lichtleitfaser (20) in Form von Schleifen, konzentrischen Kreisen oder spiralförmig angeordnet ist.

6. Kraftfahrzeuganbauteil (28) gemäß einem der Ansprüche 1 bis 5, **dadurch gekennzeichnet, dass** in die mindestens eine Lichtleitfaser (20) des faseroptischen Sensors (10) von der Lichtquelle (12) an einer Einkoppelstelle (18) über einen Polarisationsfilter (24) Licht eingekoppelt wird und an einem zweiten Ende an einer Auskoppelstelle (22) die Lichterfassungseinheit (14) angeordnet ist.

7. Kraftfahrzeuganbauteil (28) gemäß Anspruch 6, **dadurch gekennzeichnet, dass** an der Auskoppelstelle (22) ein zweiter Polarisationsfilter (26) angeordnet ist.

8. Kraftfahrzeuganbauteil (28) gemäß einem der Ansprüche 1 bis 7, **dadurch gekennzeichnet, dass** die mindestens eine Lichtleitfaser (20) verbunden ist mit einer Leiterplatine (32) mit Elektronikelementen (34), wobei Daten- und Versorgungsleitungen (38) an der Rückseite (44) des Kraftfahrzeuganbauteils (40) geführt werden.

9. Kraftfahrzeuganbauteil (28) gemäß einem der Ansprüche 1 bis 8, **dadurch gekennzeichnet, dass** die in dem Abschnitt (46) des Kraftfahrzeuganbauteils (40) aufgenommene Wandleranordnung (28) mit einer Grundplatte (36) an der Rückseite (44) des Kraftfahrzeuganbauteils (40) befestigt wird.

10. Verfahren zum Detektieren von Schall- und/oder Druckwellen unter Verwendung eines Kraftfahrzeuganbauteils (28) mit einem faseroptischen Sensor (10) gemäß einem der Ansprüche 1 bis 9, umfassend die Schritte:
- Anregen eines Abschnitts (46) des Kraftfahrzeuganbauteils (40), in dem mindestens eine Lichtleitfaser (20) integriert ist, durch eingekoppelte Schall- und/oder Druckwellen zu mechanischen Schwingungen;
- Erfassen einer Modulation des in der mindestens einen Lichtleitfaser (20) eingekoppelten Lichts;
- Auswerten der Modulation des Lichts und Ausgabe eines Signals,
wobei die eingekoppelten Schall- und/oder Druckwellen von einem zu detektierenden Objekt reflektiert werden.

## Claims

1. Motor vehicle attachment part, wherein a transducer arrangement (28) for detecting sound and/or pressure waves comprising a fibre-optic sensor (10), a light source (12) and a light detecting unit (14) is arranged on the motor vehicle attachment part, wherein the light source (12) is coupled to one end of at least one optical fibre (20) and the light detecting unit (14) is coupled to another end of the optical fibre (20), and the at least one optical fibre (20) is integrated in a section (46) of the motor vehicle attachment part that is excited by the sound and/or pressure waves, **characterized in that** the section (46) is excited by coupled-in sound and/or pressure waves, wherein the latter are emitted by an emitting unit of a sound transducer into surroundings and are reflected by an object, wherein the section (46) is chosen in such a way that the coupled-in sound and/or pressure waves have a pressure maximum.

2. Motor vehicle attachment part (28) according to Claim 1, **characterized in that** the section (46) is provided on a rear side (44) of the motor vehicle attachment part (40), wherein the section (46) is delimited from the surroundings by milled recesses and cutouts and has a central region having a reduced wall thickness.

3. Motor vehicle attachment part (28) according to either of Claims 1 and 2, **characterized in that** the coupled-in sound and/or pressure waves excite the section (46) to natural resonance.

4. Motor vehicle attachment part (28) according to any of Claims 1 to 3, **characterized in that** the at least one optical fibre (20) is introduced into the material of the motor vehicle attachment part (40) in such a way that it is arranged in the section (46) near the surface, wherein the at least one optical fibre is at least partly encapsulated by moulding.

5. Motor vehicle attachment part (28) according to any of Claims 1 to 4, **characterized in that** the at least one optical fibre (20) is arranged in such a way that it passes through the pressure maximum, wherein the at least one optical fibre (20) is arranged in the form of loops, concentric circles or spirally.

6. Motor vehicle attachment part (28) according to any of Claims 1 to 5, **characterized in that** light is coupled into the at least one optical fibre (20) of the fibre-optic sensor (10) from the light source (12) at a coupling-in location (18) via a polarization filter (24) and the light detecting unit (14) is arranged at a coupling-out location (22) at a second end.

7. Motor vehicle attachment part (28) according to Claim 6, **characterized in that** a second polarization filter (26) is arranged at the coupling-out location (22) .

8. Motor vehicle attachment part (28) according to any of Claims 1 to 7, **characterized in that** the at least one optical fibre (20) is connected to a printed circuit board (32) having electronic elements (34), wherein data and supply lines (38) are routed at the rear side (44) of the motor vehicle attachment part (40).

9. Motor vehicle attachment part (28) according to any of Claims 1 to 8, **characterized in that** the transducer arrangement (28) accommodated in the section (46) of the motor vehicle attachment part (40) is secured to the rear side (44) of the motor vehicle attachment part (40) by means of a baseplate (36).

10. Method for detecting sound and/or pressure waves using a motor vehicle attachment part (28) comprising a fibre-optic sensor (10) according to any of Claims 1 to 9, comprising the following steps:
- exciting a section (46) of the motor vehicle attachment part (40), in which at least one optical fibre (20) is integrated, to effect mechanical oscillations by means of coupled-in sound and/or pressure waves;
- detecting a modulation of the light coupled into the at least one optical fibre (20);
- evaluating the modulation of the light and outputting a signal,
wherein the coupled-in sound and/or pressure waves are reflected by an object to be detected.

## Revendications

1. Pièce de montage de véhicule automobile, dans laquelle un ensemble transducteur (28) pour détecter des ondes sonores et/ou de pression, comportant un capteur à fibres optiques (10), une source de lumière (12) et une unité de détection de lumière (14) est disposé sur la pièce de montage de véhicule automobile, dans laquelle la source de lumière (12) est couplée à une extrémité d'au moins une fibre optique (20) et l'unité de détection de lumière (14) est couplée à une autre extrémité de la fibre optique (20), et ladite au moins une fibre optique (20) est intégrée dans une partie (46) de la pièce de montage de véhicule automobile, qui est excitée par les ondes sonores et/ou de pression, **caractérisée en ce que** l'excitation de la partie (46) est produite par des ondes sonores et/ou de pression couplées, dans laquelle celles-ci sont émises dans un environnement par une unité d'émission d'un transducteur acoustique et sont réfléchies par un objet, dans laquelle la partie (46) est choisie de telle manière que les ondes sonores et/ou de pression couplées présentent un maximum de pression.

2. Pièce de montage de véhicule automobile (28) selon la revendication 1, **caractérisée en ce que** la partie (46) est prévue sur un côté arrière (44) de la pièce de montage de véhicule automobile (40), dans laquelle la partie (46) est délimitée par rapport à l'environnement par des fraisages et des découpes et présente une région centrale avec une épaisseur de paroi réduite.

3. Pièce de montage de véhicule automobile (28) selon une des revendications 1 ou 2, **caractérisée en ce que** les ondes sonores et/ou de pression couplées excitent la partie (46) jusqu'à la résonance propre.

4. Pièce de montage de véhicule automobile (28) selon l'une quelconque des revendications 1 à 3, **caractérisée en ce que** ladite au moins une fibre optique (20) est incorporée dans la matière de la pièce de montage de véhicule automobile (40) de telle manière qu'elle soit disposée dans la partie (46) à proximité de la surface, dans laquelle ladite au moins une fibre optique est au moins en partie surmoulée.

5. Pièce de montage de véhicule automobile (28) selon l'une quelconque des revendications 1 à 4, **caractérisée en ce que** ladite au moins une fibre optique (20) est disposée de telle manière qu'elle traverse le maximum de pression, dans laquelle ladite au moins une fibre optique (20) est disposée en forme de boucles, en cercles concentriques ou en forme de spirale.

6. Pièce de montage de véhicule automobile (28) selon l'une quelconque des revendications 1 à 5, **caractérisée en ce qu'**une lumière est couplée dans ladite au moins une fibre optique (20) du capteur à fibres optiques (10) de la source de lumière (12) à un point de couplage (18) au moyen d'un filtre de polarisation (24) et l'unité de détection de lumière (14) est disposée à une deuxième extrémité à un point de découplage (22).

7. Pièce de montage de véhicule automobile (28) selon la revendication 6, **caractérisée en ce qu'**un deuxième filtre de polarisation (26) est disposé au point de découplage (22).

8. Pièce de montage de véhicule automobile (28) selon l'une quelconque des revendications 1 à 7, **caractérisée en ce que** ladite au moins une fibre optique (20) est assemblée à une plaquette de circuits imprimés (32) avec des éléments électroniques (34), dans laquelle des lignes de données et d'alimentation (38) sont menées sur le côté arrière (44) de la pièce de montage de véhicule automobile (40).

9. Pièce de montage de véhicule automobile (28) selon l'une quelconque des revendications 1 à 8, **caractérisée en ce que** l'ensemble transducteur (28) logé dans la partie (46) de la pièce de montage de véhicule automobile (40) est fixé avec une plaque de base (36) au côté arrière (44) de la pièce de montage de véhicule automobile (40).

10. Procédé pour détecter des ondes sonores et/ou de pression avec utilisation d'une pièce de montage de véhicule automobile (28) avec un capteur à fibres optiques (10) selon l'une quelconque des revendications 1 à 9, comprenant les étapes suivantes:
- exciter une partie (46) de la pièce de montage de véhicule automobile (40), dans laquelle au moins une fibre optique (20) est intégrée, au moyen d'ondes sonores et/ou de pression sous forme de vibrations mécaniques;
- détecter une modulation de la lumière couplée dans ladite au moins une fibre optique (20);
- analyser la modulation de la lumière et émettre un signal,
dans lequel les ondes sonores et/ou de pression couplées sont réfléchies par un objet à détecter.
